(19)

Europäisches
Patentamt
European
Patent Office
Office européen
des brevets

(11) **EP 3 531 315 A1**

(12) **EUROPEAN PATENT APPLICATION**

(43) Date of publication:
**28.08.2019 Bulletin 2019/35**

(51) Int Cl.:
***G06F 17/30*** *(2006.01)*

(21) Application number: **18305203.4**

(22) Date of filing: **26.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Nokia Technologies Oy
02610 Espoo (FI)**

(72) Inventors:
• **Fabien, MATHIEU
75015 PARIS (FR)**
• **Anne, BOUILLARD
75012 PARIS (FR)**

(74) Representative: **Novagraaf Technologies
Bâtiment O2
2, rue Sarah Bernhardt
CS90017
92665 Asnières-sur-Seine Cedex (FR)**

(54) **A METHOD FOR SCORING OBJECTS, A METHOD OF RANKING AN OBJECT, A SOFTWARE PRODUCT AND AN APPARATUS**

(57) A method for scoring objects based on positive and negative probability weight values, indicating true-ness and false-ness respectively, of at least two attributes of the object. Using the score obtained to rank an object in relation to other objects, particularly where the object is comprised in a database. A software product arranged to implement the method. An apparatus capable of implementing the method.

FIG. 2

EP 3 531 315 A1

**Description**

**TECHNICAL FIELD**

Various example embodiments relate to the fields of Data Analytics and Chatbots. Further, the example embodiments relate to ranking of objects, particularly those objects with attributes.

**BACKGROUND**

Ranking is a process of organizing information, data or objects according to a hierarchy, predetermined criteria, score on a predetermined measure etc., by placing in a grading system, positioning in or with relation to each other, etc. Ranking can also be comprised in classification processes, for example in association with databases. In the modern world, ranking is often associated with information retrieval systems, particularly those involving machine ranking and machine learning processes.

Ranking problems are often based on random walk techniques directly applied to a graph or on diffusion (parallel walks) in that graph. The diffusion is usually based on a stochastic transition matrix representing the proximity of two states or objects. Iconic ranking algorithms comprise e.g. PageRank (an algorithm used by Google Search to rank websites in their search engine results) and HITS (Hyperlink-Induced Topic Search). Other ranking algorithms use features (i.e. a set of attributes) and a weighting can be calculated for an object, for a given attribute. In the context of (e.g. document) texts, with word attributes, classical ranking methods are often employed. For example, tf-idf (term frequency - inverse document frequency) methods comprise attributed weights, which indicate the importance of words in texts. Other ranking methods comprise clustering techniques. Such clustering techniques involve grouping objects into families of similar objects.

Many ranking techniques are based on a description of one or more objects with attributes and exploit the relationship between objects and attributes to infer ranking. A typical use case or implementation would be : given some object o, which other objects could be considered to be most similar to o ? A score value may be assigned to the object, to reflect ay similarity.

Particular issues associated with this approach comprise :-

- the ranking does not take account of a given attribute which an object does *not* have, here referred to as a negative attribute, said negative attribute frequently comprising usable information related to the object, or,
- multiple similar attributes may comprise the same information but in different forms, such that one particular characteristic is too heavily weighted (i.e. over-weighted) in the overall ranking process or structure.

As one example, consider an object 'bird'. Most birds are capable of flight - but not all. The attribute that a bird is flightless (i.e. incapable of flight) could be very relevant. To make such information available in current ranking processes is very problematic.

As another example, consider attributes of an object obtained from a plurality of databases. An attribute may have (identical) exact copies in the different databases or quasi-copies (i.e. similar but not fully identical copies) may be present. For an object of a person, the lifespan of that person may be listed in different ways in different databases. Consider that the lifespan may be expressed in terms of date of birth, age in years, actual birth year only, etc. The overall information relates to the lifespan of that person, for example at the moment of information retrieval, i.e. the same end result information is obtained several times. Thus the same attribute 'lifespan' is obtained and presented several times, thereby over-weighting the ranking.

**SUMMARY**

It is a goal of the present various example embodiments to facilitate improved ranking of objects and thereby overcome the problems detailed above.

According to a first aspect of the various example embodiments, this is achieved by provision of a method for scoring an object (o) : there is provided a method for scoring an object (o) comprising the steps of :-

- associating the object (o) with a first attribute (a), by assigning a first weight (w[o,a]) to the first attribute (a), dependent on the degree of presence or absence of the first attribute (a) for the object (o);
- associating the object (o) with a second attribute (b), by similarly assigning a second weight (w[o,b]);
- calculating a redundancy coefficient R(a,b) between first (a) and second (b) attributes, where R(a,b) comprises a measure of mutual information between first (a) and second (b) attributes, based on probability and entropy values extracted from the first (w[o,a]) and second (w[o,b]) weights;

- calculating a first transition matrix ($A^a$) and a second transition matrix ($A^o$) based on the redundancy coefficient R(a,b), where the first transition matrix ($A^a$) relates to converting an object scoring into an attribute scoring and the second transition matrix ($A^o$) relates to converting an attribute scoring vector into an object scoring;
- calculating a score (S) for the object (o) based on the first ($A^a$) and second ($A^o$) transition matrices.

Optionally, the method for scoring an object (o) further comprises that a proportion of the obtained score (S) for an object (o) is assigned to one or more attributes according to positive or negative weight of an attribute, preferably a 50% to 50%, positive to negative, proportion of the obtained scored.
Optionally, the method for scoring an object (o) further comprises the step of :-

- effecting normalization of values of the first (a) and second (b) attributes, such that the values are comprised in the weight range before calculation.

Optionally, the method for scoring an object (o) further comprises that the at least one object (o) comprises an image, a video, a text, a document or a combination thereof.
Optionally, the method for scoring an object (o) further comprises that said object (o) is arranged as comprised in a database, the database further comprising the at least two attributes of the object.
Optionally, the method for scoring an object (o) further comprises that the database comprises information retrieval results.
Optionally, the method for scoring an object (o) further comprises the steps of :-

- executing a ranking process on the database based on the score vector (S) for the object (o); and, optionally,
- iterating the ranking process.

Optionally, the method for scoring an object further comprises that the ranking process comprises round-trip ranking or multi-round ranking.
According to a second aspect of the various example embodiments, there is provided a method of ranking an object (o) with respect to other objects (o') comprising a method of scoring an object (o), where a positive score value of the score (S) indicates similarity of the object to another object (o') and a negative score value of the score (S) indicates anti-similarity.
According to a third aspect of the various example embodiments, there is provided a computer readable medium comprising program instructions stored thereon for performing a method of scoring an object (o) or a method of ranking an object (o).
According to a fourth aspect of the various example embodiments, there is provided an apparatus comprising means for carrying out a method of scoring an object (o) or a method of ranking an object (o).

## BRIEF DESCRIPTION OF THE DRAWINGS

FIG. 1 illustrates schematically an example of a bipartite database to which various example embodiments of the subject matter described herein can be applied.

FIG. 2 shows schematically a particular example of a method of scoring objects according to an example embodiment of the subject matter described herein.

FIG. 3 illustrates an example of a database to which various example embodiments of the subject matter described herein can be applied, where the fully complete database comprises weight values of attributes, based on probability, relating to particular animals.

FIG. 4 illustrates an example of a database to which various example embodiments of the subject matter described herein can be applied, where the database comprises weight values of attributes, based on probabilities, relating to several objects.

## DETAILED DESCRIPTION

The various example embodiments presented herein refer to a method for scoring objects. This method is based on attribute values. A typical use of the method is the computation of similarity scores with respect to a target object (o). It applies, for example, to a database where each object has weights (w) that have been assigned to some attributes (a, b). The weights relate to the true-ness or false-ness of an attribute for a specified object and are chosen or assigned in terms of probability.

Given an object and one of its attributes, the *weight* is positive if the attribute represents a characteristic of the object and negative if the attribute represents a characteristic that the object does not have. In other words, the sign of the weight associated with an attribute indicates if the attribute is present or absent. The absolute value represents the *intensity* of the (non)-characteristic attribute.

In particular, the various example embodiments are especially applicable to bipartite databases, although this should not be considered as limiting. Bipartite databases comprise two types of elements, here called objects and attributes.

Objects are linked to some (but not necessarily all) attributes and weights are associates to these links. The similarity of objects is measured in terms of similarity of the weighted links.

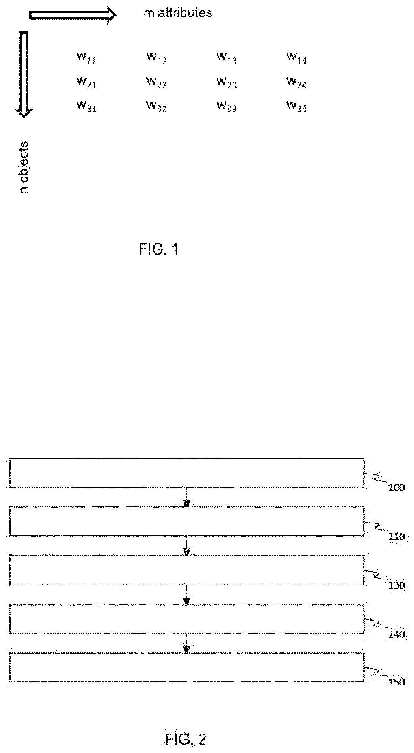

Referring now to **FIG. 1,** which illustrates schematically an example of a bipartite database to which various example embodiments of the subject matter described herein can be applied, the database comprises a total of n objects (o) associated with m attributes (a, b, ...), with each object being assigned an intensity or weight (w) for each object-attribute combination. For example, object 3 with attribute 1 has a weight of $w_{31}$.

The dimensions of this database are for example only and should not be considered as limiting. For the purpose of scaling according to the various example embodiments, the smallest database to which the techniques outlined herein could be applied is a database with one object (n=1) and two attributes (m=2). In principle, the database size is not constrained in terms of application of various example embodiments. Many databases comprise a few tens of thousands of elements, with some databases comprising up to a million or a billion elements. The application of various example embodiments is merely constrained by practicality and the capability or capacity of calculation.

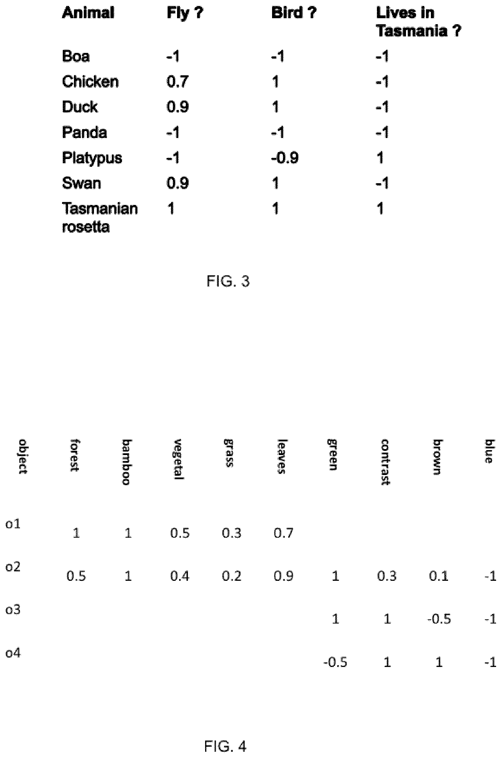

Denoted by w[o,a], w[o,a] is the intensity of a first attribute (a) of an object (o). For example, w[o,a] could comprise $w_{22}$ of the figure. Said object (o) also comprises a second attribute (b). For example, w[o,b] could comprise $w_{24}$ of the figure. It is assumed that w[o,a], w[o,b] and the other weights of the database comprise values in the range [-1,1], i.e. -1 to 1, inclusive. This range is implemented in practice by assigning attributes (a and b, for example) weight (or intensity) values in a range between 1 and -1 (inclusive), where a value of 1 indicates certainty that an attribute is present (true) and a value of -1 indicates certainty that an attribute is not present (false), for an object o. Intermediate values (between but not comprising -1 and 1), where certainty is not present, are assigned. A value of 0 indicates a 50% probability of true-ness (or false-ness). Said intermediate values thus comprise a probability of true-ness or false-ness, as discussed above. In the examples of FIG. 3 and FIG. 4 and as discussed below, the intermediate values are shown as defined to one decimal place but this should not be considered as limiting. Optionally, such action can be regarded as a 'pre-normalization' process, effected before implementation of the various example embodiments.

An object can comprise audio data, text, still image(s) or pictures, video images, documents, etc. For the purposes of application of the various example embodiments, an object, which can sustain processing such as signal processing, can be considered as a suitable type of data to which said embodiments can be applied.

The various example embodiments comprise a redundancy measure, which will be further detailed below. 'Redundancy', as a general term, often refers to extra components, attributes or information which are not strictly necessary to the function of a method but which are extra components, attributes or information, present and available. This redundancy or 'having extra' is not automatically advantageous. It is often a matter of statistical frequency or occurrence, with no further consideration of, or information about, the attributes. As previously discussed, redundancy may cause inefficiency in a method, or inaccurately weight the importance of attributes, such that calculations are adversely affected.

Specifically, according to the various example embodiments, redundancy is further defined herein as a metric computed for one or more attributes, taking into account the characteristics of an attribute and its relationship to one or more other attributes, normally associated with an object. An attribute may comprise a 'property' of said object. Such definition comprises more than a simple acknowledgement of an attribute being present, or counted, or being associated with an object. This approach results in definition and calculation of a 'redundancy measure', also referred to as a 'redundancy coefficient'. Mutual information between attributes is then obtainable.

The various example embodiments e.g. a method of scoring objects, as presented, do not consider attributes equally but combine a redundancy measure (or redundancy coefficient) to a signed similarity diffusion :-

- taken into account is the redundancy of information that is carried by the attributes : similar attributes should be given less importance individuality, to avoid excess importance globally in the overall process or method and consequent imprecision and irrelevance in the measures of similarity of objects : to overcome this difficulty, information theory is used, and a redundancy measure is introduced;
- anti-similarity regarding the attributes can also carry useful information in terms of a ranking process or method : this is taken into account in the various example embodiments by e.g. having links with negative weights;
- the various example embodiments can be applied to different types of attributes, objects and weights. In particular,

4

these can be used in combination with other scoring techniques, or be used to work with attributes that belong to different families.

Consequently, the two problems previously outlined (information conveyed by negative value and over representation of redundant features (i.e. over weighting)) are addressed and overcome by means of the various example embodiments presented herein.

Referring now to **FIG. 2,** which schematically illustrates a particular example of a method of scoring objects according to an example embodiment of the subject matter described herein, the method comprising the steps of :-

- associating the object (o) with a first attribute (a), by assigning a first weight (w[o,a]) to the first attribute (a), dependent on the degree of presence or absence of the first attribute (a) for the object (o),
- associating the object (o) with a second attribute (b), by similarly assigning a second weight (w[o,b]);
- calculating a redundancy coefficient R(a,b) between first (a) and second (b) attributes, where R(a,b) comprises a measure of mutual information between first (a) and second (b) attributes, based on probability and entropy values extracted from the first (w[o,a]) and second (w[o,b]) weights;
- calculating a first transition matrix ($A^a$) and a second transition matrix ($A^o$) based on the redundancy coefficient R(a,b), where the first transition matrix ($A^a$) relates to converting an object scoring into an attribute scoring and the second transition matrix ($A^o$) relates to converting an attribute scoring vector into an object scoring;
- calculating a score (S) for the object (o) based on the first ($A^a$) and second ($A^o$) transition matrices.

As a specific example, which should not be considered as limiting, consider a use case or implementation of the various example embodiments, as follows:-

A ranking process, effected on a database supplied with objects and associated attributes, is arranged to comprise a plurality of steps and to incorporate provisions of various example embodiments :-

- defining, by computation, redundancy coefficients for every *pair* of attributes : this is done by examining the objects of a database;
- computing a transition matrix that is used for the ranking process;
- executing the ranking process, using the transition matrix, and repeating this execution of the ranking process, as required.

Once redundancy coefficients are defined and the transition matrix is computed, according to an example embodiment as described herein, it is possible to execute the ranking process without further calculation, as needed. Various known ranking processes can be employed.

According to the various example embodiments, the definition of the redundancy coefficients is effected by computation and establishes a measure of the mutual information between any *pair* of attributes, i.e. between two attributes associated with an object. The redundancy coefficient is based on the observation of the *weight and intensity* of the attributes for all objects.

Several P values can be calculated from the weight or intensity w[o,a], where P represents a probability of trueness or false-ness of the attribute (a) in relation to the object (o) and $\Sigma_o$ comprises a summation over all objects. In particular, P[+a] is the probability that an attribute a is true (or satisfied) for an object o, while P[-a] is the probability that this attribute is not true (not satisfied) for the object. P[-a+b] indicates the combined probability that a is not true (-a) but a second attribute b is true (+b) for object o. And so forth. P can also be expressed as the probability of the appropriateness of an attribute or pair of attributes to an object. Possible combinations are detailed below in [Math 1] to [Math 6]. This probability P can also comprise a normalized probability, where weight values associated with the attributes have been normalized so that values lie between 1 and -1.

$$P[+a] = \tfrac{1}{2} + 1/(2n) \Sigma_o w[o,a] \text{ (and similarly for b)} \qquad [\ldots \text{Math 1}]$$

$$P[-a] = \tfrac{1}{2} - 1/(2n) \Sigma_o w[o,a] \text{ (and similarly for b)} \qquad [\ldots \text{Math 2}]$$

$$P[+a+b] = \tfrac{1}{4} + 1/(4n) \Sigma_o (w[o,a] + w[o,b]) \qquad [\ldots \text{Math 3}]$$

$$P[+a-b] = \frac{1}{4} + 1/(4n) \, \Sigma_o \, (w[o,a] - w[o,b]) \qquad [\ldots \text{Math 4}]$$

$$P[-a+b] = \frac{1}{4} + 1/(4n) \, \Sigma_o \, (-w[o,a] + w[o,b]) \qquad [\ldots \text{Math 5}]$$

$$P[-a-b] = \frac{1}{4} + 1/(4n) \, \Sigma_o \, (-w[o,a] - w[o,b]) \qquad [\ldots \text{Math 6}]$$

Entropy (H) is generally defined as the measure of a quantity of information embedded in a signal. This concept is also applicable to the various example embodiments. [Math 7] and [Math 8], below, are standard definitions of entropy in the context of information theory, once weights and intensities w have been interpreted as confidence in the computation of the probabilities P. For $w[o,a]=1$, the entropy $H=0$. If the value of $w[o,a]$ is a constant, the entropy H is low. Consideration of a second attribute b permits net gain of information. Extra information is added when considering two attributes instead of only one.

The entropy (H) of first (a) and second (b) attributes, a and b, can be calculated as

$$H(a) = -P[+a] \log P[+a] - P[-a] \log P[-a] \text{ (and similarly for b)} \qquad [\ldots \text{Math 7}]$$

$$H(a,b) = - P[+a+b] \log P[+a+b] - P[+a-b] \log P[+a-b] - P[-a+b] \log P[-a+b] - P[-a-b] \log P[-a-b]$$

$$[\ldots \text{Math 8}]$$

The entropy (H) represents the quantity of information which is conveyed by a single attribute i.e. H(a) or a pair of attributes i.e. H(a,b). [Math 9] converts the entropies into redundancy between two columns of the database relating to attributes a and b. [Math 10] defines the redundancy of one attribute as the sum of all appropriate pairwise redundancies.

Consequently, the redundancy coefficient R(a,b) between first and second attributes, a and b, can be defined as :-

$$R(a,b) = (H(a) + H(b) - H(a,b)) / H(a,b) \qquad [\ldots \text{Math 9}]$$

The redundancy of first attribute a is

$$R(a) = \Sigma_b \, R(a,b) \qquad [\ldots \text{Math 10}]$$

where $\Sigma_b$ indicates a summation over all attribute values of second attribute b (i.e. a column of the defined database relating to attribute b).

[Math 10] is based on information theory but is an approximation, introduced to facilitate scalability. Using an exact formula from information theory would result in an explosion in the number of attributes, which would quickly become unmanageable.

Having determined the redundancy coefficient, R(a,b), it is possible to determine a transition matrix, such as $A^a$ and $A^o$, a transition matrix comprising an effect to propagate information about an object or an attribute and rank the others by similarity. These transition matrices are directional : $A^a$ relates to how a scoring vector for objects is converted into a score vector over attributes and $A^o$ relates to how a scoring vector for attributes is converted into a score vector over objects.

Define :-

$$N^+[o] = \Sigma_a \, \max(0, w[o,a]/R(a)) \qquad [\ldots \text{Math 11}]$$

$$N^-[o] = \Sigma_a \, \max(0, -w[o,a]/R(a)) \qquad [\ldots \text{Math 12}]$$

$$N^+[a] = \Sigma_o \max(0, w[o,a])$$ [... Math 13]

$$N^-[a] = \Sigma_o \max(0, -w[o,a])$$ [... Math 14]

where N is the weighted number of attributes or objects.

Variables N can be interpreted as 'graph degrees' and represent the number of attributes/objects that are positive/negative for some objects/attributes, possibly weighted by redundancy R. For example, in [Math 11], $N^+[o]$ is interpreted as the number of attributes that are true for object o, all positive values being summed. The division by the redundancy R(a) is implemented to avoid a sur-representation (or excess representation) of redundant attributes. $N^-[o]$ similarly relates to false aspects. $N^+[a]$ describes the number of objects that are true for attribute a and similarly $N^-[a]$ relates to false aspects.

Define transition matrices $A^a$ and $A^o$ as :-

$$
\begin{aligned}
A^a[o, a] \quad &= 0 &&\text{if } w[o,a]=0 \\
&= w[o,a]/(2R(a)N^+[o]) &&\text{if } w[o,a]>0 \\
&= w[o,a]/(2R(a)N^-[o]) &&\text{if } w[o,a]<0. \qquad [\dots \text{Math 15}]
\end{aligned}
$$

$$
\begin{aligned}
A^o[a, o] \quad &= 0 &&\text{if } w[o,a]=0 \\
&= w[o,a]/(2N^+[o]) &&\text{if } w[o,a]>0 \\
&= w[o,a]/(2N^-[o]) &&\text{if } w[o,a]<0. \qquad [\dots \text{Math 16}]
\end{aligned}
$$

By means of the various example embodiments, a transition matrix, such as $A^a$ and/or $A^o$ is established. Computation using $A^a$ or $A^o$, allows transition between object and attribute scores. Using a full $A^aA^o$ (i.e. $A^a$ times $A^o$) calculation converts object scores to object score again. Where the number of attributes m is significantly lower (m<<n) than the number of objects n, using the two transition matrices in combination significantly reduces the memory footprint.

Memory footprint refers to the amount of main memory that a program uses or references while running. The word footprint generally refers to the extent of physical dimensions that an object occupies, giving a sense of its size. The computation of transitions should be fast to produce fast calculation results, so the values are typically stored in a fast memory, e.g. RAM. The matrix product $A^a$ times $A^o$ is of size m times m, so it takes $m^2$ values. On the other hand, $A^a$ and $A^o$ take mn values each, or 2mn together. For example, for a case of 1,000,000 objects and 1,000 attributes, gain will be 500. More generally, if n<m/2, using $A^a$ and $A^o$ as calculation basis s more memory-efficient than computing $A^aA^o$.

In a situation where the number of objects is much smaller than the number of attributes (n<<m), then computation of $A^aA^o$ is advantageous. Typically, as an example, the objects comprise a small set of books (no more than a few thousands) and the attributes are the words contained in the book.

Said transition matrix is now capable of application to a database. The resulting information can then be used to rank the objects of the database in an efficient and accurate manner. In this example, round-trip ranking, as detailed below, applies. $A^a$ and $A^o$ are combined to build a similarity score (S), used to transform an input vector into a similarity score. Starting with an input vector $e_o$ (a ranking vector), transition matrix $A^a$ translates the score into an attribute and then $A^o$ converts back into an object score where objects similar to o have a positive value. Score vector S is then equal to $e_o A^aA^o$ in its simplest form, as detailed below.

$$S = e_o A^aA^o$$ [... Math 17]

With normalization, relative scores can be obtained :-

$$S(o) < -S(o)/S(o) [o]$$ [... Math 18]

[Math 17] computes raw scores (S). For further refinement of the calculation of similarity scores, in order to ascertain how similar objects are, computation of the relative scores can be facilitated. Relative scores compare the score of a target object to the score of the original object. For an original object (o), the relative similarity score of a target object (o') would be given by S[o'] / S[o]. Where the input vector does not focus on one single object, it is possible to similarly define relative scores : if instead of $e_o$, a linear combination is used as input vector, e.g. $a_1 e_{o1} + a_2 e_{o2} + ... + a_k e_{ok}$, the relative score of o' would become $S[o']/(a_1 S[o_1] + a_2 S[o_2] + ... + a_k A[o_k])$.

Consider, for example, $A^a$, which converts by diffusion a score vector over objects into a score vector over attributes. If an object has a score S[o], a part S[o]/2 of that score will be transmitted to the attributes that are positive for the object o and, similarly, a part -S[o]/2 to the negative attributes. In such a case where all attributes of an object are positive or negative, it follows that $A^a$ transmits only half of the score. This characteristic is a design choice, advantageously facilitating simplicity of implementation of various example embodiments, which is subject to implementation in other ways.

Another possibility would be to fix a 50/50 split between negative and positive transmission.

Consider, by way of example, an object with a given score to be diffused. The object comprises both positive and negative attribute(s). What share of the object's score should be transmitted to the positive part and what share should be transmitted through the negative part ? The described 50/50 implementation (corresponding to the "2"s in [Math 15] and [Math 16]), advantageously provides a simple, fixed rule. Other splits may be possible, for example adaptive splits that estimate the relative importance of positive and negative attributes for the object (e.g. by counting them, or comparing the sum of the absolute values of the positive and negative attributes, possibly incorporating the redundancy...). Further, in a case where all attributes are positive (resp. all negative) for a given object and a fixed split is used, a choice exists to discard the unused share or to send all (100%) of the score through the positive (resp. negative) diffusion?

An example database is shown in FIG. 3 and various calculations and values relating to the method outlined above are discussed below in relation to the figure. Similarly, FIG. 4 relates to a heterogeneous database with missing elements. Further discussion of the calculations related to the database of FIG. 4 can be found below also.

A ranking process can now be established or executed. As examples, two types of ranking process are discussed below, namely a round-trip ranking and a multi-round ranking. However, these examples should not be considered as limiting.

*Round-trip ranking*

If o is the object, from which one wishes to compute the similarity of other objects, and $e_o$ is the row vector (i.e. a ranking vector), of object o where w is 0 everywhere except that $e_o[o]=1$, then the rank given to another object o' is:

$$e_o \, A^a A^o[o'] = \Sigma_a \, w[o,a]w[o',a] / (2R(a)N^{\pm}[o]N^{\pm}[a]), \qquad [... \text{Math 19}]$$

where $N^{\pm}$ is $N^+$ or $N^-$ depending on the sign of w[o,a] and w[o',a]. In other words, attribute a will contribute positively if attribute a is shared by objects o and o', or by none of these objects, and negatively if the attribute is possessed by exactly one of the objects.

Round trip ranking refers to the transformation from object basis to attribute basis to object basis again. Similarly, attribute basis to object basis to attribute basis could also be called a round-trip ranking. Round-trip ranking can be used as such to compute similarities between attributes (or objects). It is also at the core of the multi-round approach below.

*Multi-round ranking*

Similar to procedures comprised in classical ranking procedures, it is also possible to perform one or more multi-round ranking procedures, in order to discover more similarities (between objects or attributes). This can be useful if not all attributes are defined for all objects. An example of a database where attributes are not defined for all objects can be seen in FIG. 4 - see description below.

This kind of ranking is iterative. Round trip calculations refine with each iteration, numbered below by 'k'. [Math 21] shown below is essentially [Math 17], the score S, in terms of a multi-round application. Such repeat and iteration re-converts the obtained score over objects into score over attributes and back, and so forth... As the iterations progress, the original object becomes less important and more remote in the calculations.

We denote $S^o = A^o A^a$. That is, $A^o$ times $A^a$. This (score) matrix is a square matrix of dimension according to the number of attributes (which is assumed smaller than the number of objects). For any $d \in (0,1)$, one can define multi-round matrix B:-

$$B = \Sigma_{k \geq 0} d^k (A^o A^a)^k \qquad [... \text{Math 20a}]$$

Written alternatively, we denote $C = A^o A^a$. C is a n times n square matrix (from attributes to attributes) which corresponds to a round-trip that starts from attributes (instead of objects in the previous case). C is introduced based on an assumption that the number of attributes is smaller than the number of objects, and, in particular that C is small enough to fit in RAM during implementation. Consequently, a round-trip starting from attributes is easier to compute than a round-trip starting from objects. To compute k>0 consecutive round-trips that start from objects, a diffusion from object to attributes is required (which corresponds to multiplying by $A^a$), then performing k-1 round trips that start from attributes (which corresponds to multiplying by $C^{k-1}$) and, finally, to get back to objects by multiplying by $A^0$. To summarize, the score after k round-trips, with initial input $e_o$, is given by $e_o A^a C^{k-1} A^o$.

Further, it is preferred to aggregate the scores for multiple values of k. To do that, a sequence that geometrically decays with k is considered. For any damping factor $d \in (0,1)$, one can define the following matrix B, which aggregates round-trips that start from attributes for multiple values of k:

$$B = \Sigma_{k \geq 0} d^k C^k \qquad\qquad [\dots \text{Math 20b}]$$

B can be pre-computed and used to accelerate the computation of a multi-round ranking, which we express as:

$$S = e_o \Sigma_{k>0} d^k (A^a A^o)^k = d e_o A^a \Sigma_{k \geq 0} d^k C^k A^o = d e_o A^a B A^o \qquad [\dots \text{Math 21}]$$

where $d_k$ relates to the decreasing vector with each iteration being numbered by k.

The term k represents the iteration number for each additional round trip ranking. The sum over integers k (i.e. $\Sigma_k \geq 0 d^k$) represents the number of additional round-trips made : k=0 represents the first round-trip and has relative importance $d^o = 1$. k=1 represents the second round-trip and has importance $d^1 = d$. And so on... Ranking techniques usually comprise the accumulation of the scores obtained after each iteration and consequent diminishment of their importance. The sum is theoretically infinite, but in practice it converges to a stationary process after a few iterations. The variable d is a damping factor. For example, Google uses a damping factor d=0.85 in its famous PageRank algorithm, but it is something that needs to be tuned for the problem considered. Preferably, for the various example embodiments, d=0.5 as a default value, thereby effecting each round-trip is half as important (i.e. 50% less important) than the previous one.

Further, the various example embodiments can be applied when the attributes are not all defined, for example when there are different families of objects, and some objects have attributes in several but not all the families of objects. Such examples are now discussed with refer to FIG. 3 and FIG. 4.

For example, consider objects that can comprise both text and pictures. Attributes can be words and parameters of the pictures (obtained, for example, from (machine) learning). Some pictures might have a legend, which makes it possible to have word and image attributes. For the picture of a panda, associated the texts about pandas may also be accessible or available.

The determined redundancy (and redundancy coefficients) can be affected by the absence of attributes: for example, the word *panda* (meaning the animal) can be highly correlated with picture parameters or characteristics, such as "black and white", "high contrast", "vegetation/green"... which are irrelevant to the panda animal itself, in terms of characterizing the animal, and might not appear in texts. Without further adaptation, when the redundancy coefficient calculation, as described above is effected, the word attribute "panda" will be assigned less weight because of the correlation to attributes not defined in texts and not associated with the animal. In other words, the information concerning photographic images, which details characteristics of the photographs, will interfere with effective characterization of the attributes of the panda, as text.

Considering object o, the definition of $R^o(a)$, the redundancy (coefficient) of attribute a with respect to o, is expressed as:-

$$R^o(a) = \Sigma_{b \in Att(o)} R(a,b), \qquad\qquad [\dots \text{Math 22}]$$

where Att(o) is the set of attributes defined for object o.

The propagation must then be modified. The modifications comprise the following:

$$N^+[o] = \Sigma_{a \in Att(o)} \max(0, w[o,a] R^o(a)) \qquad\qquad [\dots \text{Math 23}]$$

$$N^-[o] = \Sigma_{a \in \text{Att(o)}} \ \max(0, -w[o,a]R^o(a)) \qquad\qquad [\ldots \text{Math 24}]$$

and $A^a$ is computed accordingly.

*Alternative scoring*

By use of suitable equations the same various example embodiments can be used for other scoring use cases:

- find an object that represents a set of objects, even if the best representation does not belong to the set;
- find an object that represents a given attribute or set of attributes;
- find the attribute that best describes a set of objects.

More detailed calculations and examples are now described.

Referring now to **FIG. 3,** illustrating an example of a database to which various example embodiments of the subject matter described herein can be applied, where the fully complete database comprises weight values of attributes, based on probability, relating to particular animals.

The various example embodiments effect computation of a similarity: given an entry in a database, which are the most similar other entries? Redundancy is a metric that is computed for attributes and/or objects, using the equations as outlined above. The equations indicate and define the mutual information between any two pairs of attributes, which can be interpreted as cross-comparing the 'correlations' between pairs of attributes. The meaning and detail of the result applies to the database columns and indicates how much the information contained in a given column is replicated in other columns.

In any data set for which various example embodiments are implemented, the dataset may require further pre-processing. For example, a large body of data in a database may comprise a variety of different types of data, e.g. which may include images, movies, text, sounds. It may be desirable to identify a particular kind of data as a first step and restrict application of the method to that kind of data. For the example of FIG. 3, this is not necessary as the database considered comprises normalized probability values for each attribute, i.e. the attributes are selected as relevant to each other and a numerical value is assigned relating to each object identified.

Consider the table shown in FIG. 3, the tabulated numerical values of which comprise relevant data. This database comprises information on eight objects (n=8), in this case animals, and three attributes (m=3) which can be associated with the objects. In this example, the attributes comprise if the animal can fly, if the animal is a bird and if the animal lives in Tasmania.

The input dataset comprises row objects (here animals), denoted by variable o ; column attributes (fly, bird...), denoted by variable a for a first attribute, b for a second attribute, etc. ; numerical database entries denoted by w[o,a] and ranging from -1 to 1 ; intensity and weight values w interpreted as an indication of the probability that an attribute is true, where 1 means 100% true, 0 means 50% true and -1 means 0% true (or 100% false).

The intensity w[Chicken, Fly?] = 0.7, meaning that the confidence that a chicken can fly is (0.7+1) times 50 = 85%. Converting a value in the weight range 1 to -1 into a confidence value is achieved by $x \to (x+1)/2$. Here, (0.7+1)/2=0.85. This probability value of 85% may originate from experiment where in a population of chickens 85% of them managed to fly, or alternatively where a poll was conducted and 85% of people believe that chickens can fly, or alternatively the technical definition of flying is fulfilled at 85% by a chicken. The basis of the actual value is not important to the method, it is merely important to have an interpretation of confidence that the attributed is verified.

Each database attribute is provided with an intensity or weight (w) according to its relevance to the animal (object). The numerical values of this example, have been subject to a pre-normalization process and indicate the validity of an attribute for an object. A value of 1 means that the attribute is definitely present for an object, while a value of -1 that it is definitely absent, and intermediate values are used to assert uncertainty, based on probability. *Chicken* has a fly value of 0.7, as it can only fly over very short distances; *Swan* and *Duck* have fly values of 0.9, as they may need a water plan to take off; *Platypus* has a bird value of -.9 as it shares some characteristics of birds (e.g. lay eggs, have a beak). Other values are +1 or -1 as the answer is certain.

According to various example embodiments, it is possible to calculate probabilities that attributes (or pairs of attributes) are satisfied, by means of [Math 1] and [Math 2]. For example, using [Math 1], the probability that an animal of the dataset can fly is 54%, the probability that it is a bird is 58%. These probabilities relate to single attributes i.e. a single column of the database. Using [Math 3], the probability that an animal is a bird that can fly is 32%. In other words, two attributes, i.e. two columns of the database, are considered in combination.

Computation of entropies H, which represent the quantity of information that is conveyed by a single attribute (H(a)) or a pair of attributes (H(a,b)) is achieved by means of [Math 7] and [Math 8]. This relates to definitions of entropy in the context of information theory, once the weights have been interpreted as confidence, to compute probabilities (P).

[Math 9] is used to convert entropies obtained into quantified redundancy between two attributes or columns. This results in R (bird, fly) as approximately 64%, which indicates that the two columns contain similar information. R(bird, Tasmania) and R(fly, Tasmania) are both less than 1% (thus, relatively low). Note that the redundancy of an attribute with itself is 100%: R(bird, bird) = 1.

[Math 10] defines the redundancy of one attribute as the sum of all pairwise redundancies it belongs to. For example R(fly) = the sum, for all attributes b, of R(fly, b) = R(fly, fly)+R(fly, bird)+R(fly, Tasmania)=1.64

Thus, according to various example embodiments, the *Fly* attribute (first column) has a redundancy 1.64. *Bird* (second column) has also redundancy 1.64. *Lives in Tasmania* (third column) has a redundancy 1. That means that a large fraction (0.64) of the information conveyed by the first column is also included elsewhere (i.e. in the second column), and vice versa. On the other hand, the information conveyed by the third column is uniquely contained in the first column. Hence, when computing similarities between objects, the various example embodiments will reduce the importance of the first two columns by a ratio 1.63 while keeping the importance of the last (third) column unchanged.

Next, two transition matrices are constructed: one matrix that will describe how a scoring vector for objects should be converted into a scoring vector for attributes $A^a$, and the other for the other way around for $A^o$. The matrices comprise, simultaneously, both negative and positive information. For example, [Math 11], $N^+[o]$ is interpreted as the number of attributes that are True for object o: We sum all the positive values. The division by redundancy is here to avoid a sur-representation (i.e. over-representation) of redundant attributes. $N^-[o]$ does the same thing for assessing the number of False attributes. $N^+[a]$ (and respectively $N^-[a]$) describes the number of objects that are True (respectively, False) for attribute a. Redundancy renormalization is unnecessary in this particular case, as all objects are assumed to have the same importance. It is a possibility to achieve a redundancy weighting where the same kind of weighting is used from attributes to object. For example, if there are multiple sub-species of chicken considered in the study, it is possible to avoid or remove most of the score from an attribute associated with chicken, just because there are a lot of chickens.

[Math 15] details calculation of $A^a$, which converts by diffusion a score vector over objects into a score vector over attributes. If an object has a score S[o], a part S[o]/2 of that score will be transmitted to the attributes that are positive for o, a part -S[o]/2 to the attributes that are negative. In this particular example, when all attributes of an object are positive or negative, our current implementation only retransmits half of the original score. Calulations based on the database fo FIG. 3 result in, for example *Chicken,* the row of $A^a$ computed with [Math 15] is (21%, 29%, -50%), which means that if *Chicken* has a score 100, it will yield to an attribute score vector (21, 29, -50). The sum of the absolute value remains 100. The minus sign that embeds the fact that chicken do not live in Tasmania. For example *Boa,* the row is (-14%, -14%, -22%), so a score 100 on *Boa* gives attribute score of (-14, -14, -22).

It should be noted:

- the sum of absolute value is 50, because all values are negative some the positive part is lost;
- Although *Boa* has the same value over the 3 attributes (-1), the score is not equally shared but the *Lives in Tasmania?* column gets a higher share. This change is made by the use of redundancies in [Math 11], [Math 12] and [Math 15] and is important in the method (automatic handling of negative attributes is also important).

[Math 16] facilitates building of $A^o$ for the reverse conversion (where an attribute score is diffused to objects). For example, the row of the *Fly?* attribute is (-17%, 10%, 13%, -17%, -17%, 13%, 14%). The negative part is equally shared between all animals with negative entries because these entries are equal, while the positive part embeds the differences, e.g. *Chicken* will receive a smaller score than *Tasmanian rosetta* for the attribute *Fly?.*

Combination of $A^a$ and $A^o$ builds a similarity score S, according to [Math 17]. An input $e_o$ where all score relates to object o (and it can be assumed that the score is 1, or 100, or any positive value, as this has no effect on the result apart from a uniform scaling). Matrix $A^a$ translates the score into an attribute, then $A^o$ converts back into an object score where objects similar to o have a positive value.

A score $S(o)= e_o \, A^a A^o$, can be subject to a normalization $S(o) <- S(o)/S(o)[o]$, to obtain relative scores.

According to the various example embodiments, it is possible to compute similarity scores, positive values indicating similarity (the higher the better) and negative values indicating absence of similarity. In the example of FIG. 3, the computed similarity score of the other animals compared to the *Platypus* are the following: *Tasmanian rosella,* 0.28; the two other non-bird species, *Boa* and *Panda:* 0.17; the last three species, all birds, have highly negative similarities, lower than -0.5. Acknowledging and utilizing redundancy, as described herein, makes visible the positive similarity (based on the database values in the table of FIG. 3 and utilising [Math 11] and [Math12]) between *Platypus* and *Tasmanian Rosella.* Without redundancy normalization', the *Tasmanian rosella* would have been assigned a negative similarity score compared to the *Platypus,* as the common point (*Lives in Tasmania?*) would have been overwhelmed by the combined weights of the *Fly?* and *Bird?* attributes.

By means of [Math 21] the process of [Math 17] can be re-iterated, i.e. re-convert the obtained score over objects into score over attributes and back, etc. This facilitates implementation of multi-round ranking processes.

Returning to possible additional complexity of a database, consider that the database may be heterogeneous, i.e. comprise different categories of data. For an object of *Panda* (as in the database of FIG. 3), a database may comprise documents of different types. One simple example can be pictures or images and text, perhaps in a web content. Some images may be inserted with a legend (or embedded in a paragraph). Some pictures may not be associated with any text (i.e. no legend, no descriptive text). Some pages that have no images.

Pictures can be associated to features by a pre-processing (for example, GoogleNet, or another neural network trained with ImageNet, or any other technique), to facilitate association of weights w to some characteristics of the images. Among these characteristics, if the pre-processor is efficient, differentiation between a *Panda* and a bear or white bear is possible and some features may represent "high contrast" or "black and white". Texts can have attributes that are words, and in texts about *Pandas,* the word "panda" should be present quite often.

Ranking web-content containing a picture only, the diffusion process will start with discovering only objects with a common feature that is containing at least an image (and potentially text). In the second round, weights will diffuse to text-only objects, as they have common attributes with images/text objects.
For text only messages, it is preferable to take into account only the "words" attributes and not the "image" attributes for computing e.g. R(a).

Concerning objects with multiple images, several solutions can be implemented, depending on the context. If the images are similar (i.e. they have similar weight on the attributes, then it is possible to average the weights (performed as a pre-processing) to revert to a case with text and one image. If the attributes differ (because all pictures do not contain a panda, but also a bamboo forest), it might be necessary to adapt the weights beyond a simple average of weights. Another solution would be to post-process : ranking all the images (associated or not to text), and infer a global ranking from all these image rankings. Another approach would be to sum the rank.

Referring now to **FIG. 4,** where FIG. 4 illustrates an example of a database to which various example embodiments of the subject matter described herein can be applied, where the database comprises weight values of attributes, based on probabilities, relating to several objects.

In the database of FIG. 4, objects relate to the subject of *Panda* : four objects o1 to o4 are shown, the number of objects being small for simplicity but representing a set of objects with similar characteristics. In particular, the objects comprise :-

o1: text about panda and its environment: a bamboo forest
o2: the combination of a text and an image
o3: an image representing a panda in a bamboo forest
o4: a red panda in the snow

The main *Panda* subject is omitted in the table (but in relation to objects o1 to o4 would have weight values the same as *bamboo*) but the other attributes, such as *forest, bamboo, vegetal, grass* and *leaves,* are words and attributes for texts. Attributes *green, contrast, brown* and *blue* are attributes for the images.

Redundancy coefficients for the different attributes, calculated according to various example embodiments as described above, are thus :-

$$R(\textit{forest}) = 1.00374338$$

$$R(\textit{bamboo}) = 3.0$$

$$R(\textit{vegetal}) = 1.00028$$

$$R(\textit{grass}) = 1.0002232$$

$$R(\textit{leaves}) = 1.00341843$$

$$R(\textit{green}) = 2.18395892$$

$$R(contrast) \quad 1.04133713$$

$$R(brown) = 1.14394041$$

$$R(blue) = 2.0$$

Consequently, when ranking the images, in a first round, the attribute *green* will be give two times less importance than *brown,* whereas the ranking discriminates among the images only objects.

If considering image attributes only, the redundancy becomes :-

$$R(green) = 1.18$$

$$R(contrast) = 1.04$$

$$R(brown) = 1.14$$

$$R(blue) = 1$$

This is more accurate than when ranking the images (first round)

The typical input format for the various example embodiments is as shown above. Image analysis is not required, nor is machine learning. Such techniques can be combined with various example embodiments in a workflow, but this is not required or necessary.

No image analysis or machine learning is required, for example, where the corpus is a set of documents, the attributes are the words used in these documents, normalized so that a word has a positive weight if it is more present than average in a document, negative otherwise. Implementation of various example embodiments directly produces similarity scores between documents.

By contrast, where the "objects" are people, each one being represented by a set of pictures, image analysis and machine learning can be employed to populate attributes values for each picture, e.g. male/female, blond/dark hair. The attributes of pictures are then aggregated for each person (for example, by averaging), and then the various example embodiments can be used to find out which people look alike. Resulting similarity scores can then be used as input for other techniques, for example as refined features to feed the supervision of a neural network.

In the case where a database contains elements, which are in one position but comprise e.g. text and pictures, the attribute itself is complicated and complex. Thus the (possibly multiple) characteristics of the attribute itself are examined before determining the relevance of parts of the information, discarding if necessary.

A database can comprise a collection of information retrieval results. Such databases may be the result of a search performed on the internet, or on a corporate intranet, or a search on a mobile device for locally stored documents, pictures, etc. These examples should not be considered as limiting, however. Results from a plurality of searches may be stored in a database.

It should be noted that the various example embodiments are detailed here in terms of pairs of attributes, i.e. two attributes a and b. This should not be considered as limiting, however. The various example embodiments are susceptible to extension to three of more attributes taken into account in the scoring process. An advantage of reducing the attributes to a pair is the speed and efficiency of implementation.

The calculations required to consider three attributes, (a, b and c) and an associated redundancy coefficient on which a score calculation could be based, utilize probability P expressed in terms of the probabilities associated with each attributes and also the various positive and negative possibilities of combination. That is to say probability P comprises consideration of P(+a,+b,+c), P(+a,+b,-c), P(+a,-b,-c) ... and so forth ...P(-a,-b,+c), P(-a,-b,-c). R[a,b,c] requires eight additional probabilities compared with the consideration of a pair of attributes (a,b). For n attributes subject to an extensive analysis according to the various example embodiments, the number of probabilities required is $2^{n+1}$. For practical purposes, smaller values of n (i.e. n less than 100, preferably less than 30) are preferred. Chosen implementation may rely on the capability of computing resources available.

As an example of implementation of various example embodiments in existing systems and devices, which is exemplary only and should not be considered as limiting, consider the field of Chatbots. A Chatbot is a computer program designed to simulate conversation with human users. Interaction between Chatbot and user is usually implemented over the Internet.

A user may pose a questions to a Chatbot. The Chatbot does not comprise the specific answer required but does comprise a database with a dataset of questions which have already been answered. By utilization of the attributes of the existing dataset, an object based on the posed question and the various example embodiments, the Chatbot can compute the existing questions which are most similar to the posed question. The (similarity) score obtained can be further used to estimate the pertinence of the results.

For example, if the posed question is "I liked the movie Inception, can you recommend a movie to watch which I would enjoy ?", then the Chatbot may base a recommendation on similarity. For such a similarity scoring, a possible input vector with value 1 for the object (movie Inception) is defined and value 0 for the rest.

Other user preferences may be more complex but can still be handled by various exemplary embodiments if expressed as ratings over a subset of objects, these preferences being arranged to build an input vector for the scoring method and similarity computation.

## LIST OF REFERENCE NUMERALS

| | |
|---|---|
| a, b, c | attributes |
| o | object |
| n | number of objects |
| m | number of attributes |
| w[o,a] | weight associated with attribute a for object o |
| w[o,b] | weight associated with attribute b for object o |
| P | probability of an attribute or pair of attributes, related to true-ness or false-ness for an object o |
| H | entropy, related to amount or quantity of information, measured for a single attribute or pair of attributes |
| R | redundancy coefficient or measure |
| N | degree or weighted number of attributes |
| $A^a$ | matrix describing the transformation from a score vector over objects to a score vector over attributes |
| $A^o$ | matrix describing the transformation from a score vector over attributes to a score vector over objects |
| $e°$ | a score vector over objects where each object o has score 1 and all other objects have score 0 9used to computer similarity scores between o and other objects |
| S | a score vector over objects or attributes |
| d | damping factor indicating the relative importance of the successive round trips in multi-round ranking |
| B | matrix that characterizes the impact of multi-round ranking |
| C | n time n square matrix corresponding to a round-trip from attributes |

110 to 150    method steps

## Claims

1. A method for scoring an object (o) comprising the steps of :-

    • associating the object (o) with a first attribute (a), by assigning a first weight (w[o,a]) to the first attribute (a), dependent on the degree of presence or absence of the first attribute (a) for the object (o);
    • associating the object (o) with a second attribute (b), by similarly assigning a second weight (w[o,b]);
    • calculating a redundancy coefficient R(a,b) between first (a) and second (b) attributes, where R(a,b) comprises a measure of mutual information between first (a) and second (b) attributes, based on probability and entropy values extracted from the first (w[o,a]) and second (w[o,b]) weights;
    • calculating a first transition matrix ($A^a$) and a second transition matrix ($A^o$) based on the redundancy coefficient R(a,b), where the first transition matrix ($A^a$) relates to converting an object scoring into an attribute scoring and the second transition matrix ($A^o$) relates to converting an attribute scoring vector into an object scoring;alculating a score (S) for the object (o) based on the first ($A^a$) and second ($A^o$) transition matrices.

2. A method for scoring an object as claimed in claim 1, wherein a proportion of the obtained score (S) for an object (o) is assigned to one or more attributes according to positive or negative weight of an attribute, preferably a 50% to 50%, positive to negative, proportion of the obtained scored.

3.  A method for scoring an object (o) as claimed in claim 1 or claim 2, where the method further comprises the step of :-

    • effecting normalization of values of the first (a) and second (b) attributes, such that the values are comprised in the weight range before calculation.

4.  A method for scoring an object (o) as claimed in any preceding claim, wherein the at least one object (o) comprises an image, a video, a text, a document or a combination thereof.

5.  A method for scoring an object (o) as claimed in any preceding claim, wherein said object (o) is arranged as comprised in a database, the database further comprising the at least two attributes of the object.

6.  A method for scoring an object (o), as claimed in claim 5, wherein the database comprises information retrieval results.

7.  A method for scoring an object (o) as claimed in claims 5 or 6, wherein the method further comprises the step of :-

    • executing a ranking process on the database based on the score vector (S) for the object (o); and, optionally,
    • iterating the ranking process.

8.  A method for scoring an object (o) as claimed in claim 7, wherein the ranking process comprises round-trip ranking or multi-round ranking.

9.  A method of ranking an object (o) with respect to other objects (o') comprising a method of scoring an object (o) as claimed in any preceding claim 1 to 5, where a positive score value of the score (S) indicates similarity of the object to another object (o') and a negative score value of the score (S) indicates anti-similarity.

10. A computer readable medium comprising program instructions stored thereon for performing a method of scoring an object (o) as claimed in claims 1 to 8 or a method of ranking an object (o) as claimed in claim 9.

11. An apparatus comprising means for carrying out a method of scoring an object (o) as claimed in claims 1 to 8 or a method of ranking an object (o) as claimed in claim 9.

m attributes

$w_{11}$      $w_{12}$      $w_{13}$      $w_{14}$

$w_{21}$      $w_{22}$      $w_{23}$      $w_{24}$

$w_{31}$      $w_{32}$      $w_{33}$      $w_{34}$

n objects

FIG. 1

100

110

130

140

150

FIG. 2

| Animal | Fly ? | Bird ? | Lives in Tasmania ? |
|---|---|---|---|
| Boa | -1 | -1 | -1 |
| Chicken | 0.7 | 1 | -1 |
| Duck | 0.9 | 1 | -1 |
| Panda | -1 | -1 | -1 |
| Platypus | -1 | -0.9 | 1 |
| Swan | 0.9 | 1 | -1 |
| Tasmanian rosetta | 1 | 1 | 1 |

FIG. 3

| object | forest | bamboo | vegetal | grass | leaves | green | contrast | brown | blue |
|---|---|---|---|---|---|---|---|---|---|
| o1 | 1 | 1 | 0.5 | 0.3 | 0.7 | | | | |
| o2 | 0.5 | 1 | 0.4 | 0.2 | 0.9 | 1 | 0.3 | 0.1 | -1 |
| o3 | | | | | | 1 | 1 | -0.5 | -1 |
| o4 | | | | | | -0.5 | 1 | 1 | -1 |

FIG. 4

Europäisches
Patentamt

European
Patent Office

Office européen
des brevets

# EUROPEAN SEARCH REPORT

Application Number

EP 18 30 5203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H01 231124 A (NEC CORP) 14 September 1989 (1989-09-14) * the whole document * | 1-11 | INV. G06F17/30 |
| X | JANUSZ ANDRZEJ ED - WALTER DIDIMO ET AL: "Algorithms for Similarity Relation Learning from High Dimensional Data", 3 March 2014 (2014-03-03), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 174 - 292, XP047269757, ISSN: 0302-9743 ISBN: 978-3-642-38988-7 * page 52 - page 53 * | 1-11 | |
| X | WO 2015/065590 A1 (ORACLE INT CORP [US]) 7 May 2015 (2015-05-07) * paragraph [0001] - paragraph [0003] * * paragraph [0005] * * paragraph [0011] * * paragraph [0033] - paragraph [0036] * | 1-11 | |
| X | US 2010/104200 A1 (BARAS DORIT [IL] ET AL) 29 April 2010 (2010-04-29) * paragraph [0001] - paragraph [0006] * * paragraph [0015] - paragraph [0019] * * paragraph [0022] * * paragraph [0026] * | 1-11 | TECHNICAL FIELDS SEARCHED (IPC) G06F |

The present search report has been drawn up for all claims

| Place of search | Date of completion of the search | Examiner |
|---|---|---|
| The Hague | 13 April 2018 | Boubal, François |

EPO FORM 1503 03.82 (P04C01)

## ANNEX TO THE EUROPEAN SEARCH REPORT
## ON EUROPEAN PATENT APPLICATION NO.

EP 18 30 5203

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2018

| Patent document cited in search report | | Publication date | Patent family member(s) | | Publication date |
|---|---|---|---|---|---|
| JP H01231124 | A | 14-09-1989 | NONE | | |
| WO 2015065590 | A1 | 07-05-2015 | JP | 6231204 B2 | 15-11-2017 |
| | | | JP | 2017501477 A | 12-01-2017 |
| | | | US | 2015127419 A1 | 07-05-2015 |
| | | | WO | 2015065590 A1 | 07-05-2015 |
| US 2010104200 | A1 | 29-04-2010 | NONE | | |

EPO FORM P0459

For more details about this annex : see Official Journal of the European Patent Office, No. 12/82